(19) Europäisches Patentamt
European Patent Office
Office européen des brevets

(11) Publication number: **0 083 509**
**B1**

(12) # EUROPEAN PATENT SPECIFICATION

(45) Date of publication of patent specification: **20.05.87**

(51) Int. Cl.$^4$: **G 10 L 5/00**

(21) Application number: **82307011.5**

(22) Date of filing: **23.12.82**

(54) **Speech recognition with preliminary matching.**

(30) Priority: **25.12.81 JP 210605/81**

(43) Date of publication of application:
**13.07.83 Bulletin 83/28**

(45) Publication of the grant of the patent:
**20.05.87 Bulletin 87/21**

(84) Designated Contracting States:
**DE FR GB IT**

(56) References cited:
**EP-A-0 074 822**

**THE BELL SYSTEM TECHNICAL JOURNAL, vol. 58, no. 8, October 1979, pages 1797-1823, New York, USA, A.E. ROSENBERG et al.: "Automatic recognition of spoken spelled names for obtaining directory listings"**

(73) Proprietor: **SHARP KABUSHIKI KAISHA**
**22-22 Nagaike-cho Abeno-ku**
**Osaka 545 (JP)**

(72) Inventor: **Hishioka, Yoshiki**
**160-19 Shoji-cho**
**Tenri-shi Nara-ken (JP)**
Inventor: **Hakaridani, Mitsuhiro**
**856-12 Kidera-cho**
**Nara-shi Nara-ken (JP)**
Inventor: **Iwahashi, Hiroyuki**
**3-74 Shijooji 3-chome**
**Nara-shi Nara-ken (JP)**

(74) Representative: **Wright, Peter David John et al**
**R.G.C. Jenkins & Co. 12-15, Fetter Lane**
**London EC4A 1PL (GB)**

**EP 0 083 509 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

PROCEEDINGS OF THE FOURTH INTERNATIONAL JOINT CONFERENCE ON PATTERN RECOGNITION, 7th-10th November 1978, Kyoto, pages 985-989, IEEE, New York, USA, SEI-ICHI NAKAGAWA et al.: "A real time spoken word recognition system in a large vocabulary with learning capability of speaker differences"

IEEE TRANSACTIONS ON ACOUSTICS, SPEECH, AND SIGNAL PROCESSING, vol. ASSP-23, no. 1, February 1975, pages 67-72, New York, USA, F. ITAKURA: "Minimum prediction residual principle applied to speech recognition"

IEEE TRANSACTIONS ON ACOUSTICS, SPEECH AND SIGNAL PROCESSING, vol. ASSP-27, no. 4, August 1979, pages 336-349, New York, USA, L.R. RABINER et al.: "Speaker-independent recognition of isolated words using clustering techniques"

ICASSP 80, IEEE INTERNATIONAL CONFERENCE ON ACOUSTICS, SPEECH AND SIGNAL PROCESSING, vol. 1, 9th-11th April 1980, Denver, USA, pages 199-202, IEEE, New York, USA, R. NAKATSU: "A speech recognition machine for connected words"

## Description

The present invention relates to a method of speech recognition. More particularly it relates to a speech recognition system in which, for example, characteristic patterns of the speech to be recognized are compared with the characteristic patterns of a plurality of preliminarily registered speech elements before the input speech patterns are matched to the registered speech patterns.

In a conventional speech recognition system there is first performed, for example, a matching operation using DP matching in relation to the characteristic patterns of individual input speech elements to be recognized and the characteristic patterns of a plurality of the preliminarily registered individual speech elements, so that the speech elements can eventually be recognized in accordance with the result of the matching operation carried out.

Nevertheless, if all the characteristic patterns of a plurality of the preliminarily registered individual speech elements must be compared in detail, either vastly complex calculations or high speed hardware will be necessary, and as a result, such a system becomes costly.

To eliminate this inconvenience, it has been proposed to use what is known as "preliminary selection", to limit the number of the registered speech elements for comparison by preliminarily selecting candidates using the DP matching method before they are compared in detail.

In IEEE Transaction on Acoustics, Speech, and Signal Processing, Vol. ASSP—23 No. 1, February 1975, pp. 67 to 72 article "Minimum Prediction Residual Principle Applied to Speech Recognition" by F. Itakura, a system is disclosed in which an input pattern having a plurality of segments is compared, respective segment with respective segment, with reference patterns having a plurality of segments, and a cumulative 'distance' value is calculated from these comparisons. In order to save calculation time, a respective threshold is set for the cumulative value at each segment, and if for any reference pattern this threshold is exceeded at any segment the reference pattern is rejected without calculating the value for subsequent segments. If a reference pattern similar to the input is found, the threshold is set to a lower value and thereafter only references at least equally similar to the input are examined in detail and the other references will be rejected at earlier stages.

According to the present invention there is provided a method of speech recognition in which,

in a preliminary comparison operation a preliminary comparison is made between an input speech pattern and each of a plurality of registered speech patterns, and

in a further comparison operation a further comparison is performed between the said input speech pattern and each of selected ones of the said plurality of registered speech patterns, the selected registered speech patterns being selected on the basis of the preliminary comparison operation,

characterised in that

the said further comparison operation comprises, for all the said selected registered speech patterns following the first to be subjected to the further comparison operation, initiating the calculation of a parameter correlative to the degree of resemblance between the input speech pattern and the respective registered speech pattern and abandoning the said calculation in respect of that registered speech pattern if a threshold for said parameter is passed during the said calculation, which threshold has a single value (X) throughout the calculation and is initially set with reference to the degree of resemblance between the said first selected registered speech pattern and the said input speech pattern,

and the order in which the said comparisons in the further comparison operation are conducted on the said selected registered speech patterns follows the order of the similarity between each respective said registered speech pattern and the said input speech pattern as determined by the said preliminary comparison operation, beginning with the most similar.

Preferably, the said parameter for a respective registered speech pattern is calculated cumulatively in a plurality of stages and the said specific condition is defined in terms of a predetermined threshold value for the said parameter.

Embodiments of the present invention, given by way of non-limitative example, will now be described with reference to the accompanying drawings, in which:

Figure 1 shows a block diagram of a preferred embodiment of the present invention;

Figures 2A and 2B show flow charts describing sequential operations of the embodiment of Figure 1 in the preliminary comparison and further comparison respectively;

Figures 3A and 3B show charts illustrating the matching operations performed by the preliminary and the final selection units 5, 7 shown in Figure 1 respectively;

Figure 4 shows differential curves during the matching operation using the final selection unit 7; and

Figure 5 shows a block diagram of another embodiment of the present invention.

Figure 1 shows a block diagram of a preferred embodiment of the present invention. In the preferred embodiment, a speech signal is fed to a characteristic pattern extraction circuit 1 which extracts the characteristics of the speech signal upon arrival, for example, using self correlation coefficients. The output from the characteristic pattern extraction circuit 1 is fed to a mode select switch 2, which, by switching its contact point, feeds the output from the characteristic pattern circuit 1 to a pattern memory 3 when the speech identifying operation is performed, while said output is fed to another pattern memory, which provides a register table 4, when the characteristic patterns are being registered.

The pattern memory 3 has a memory capable of memorizing the characteristic output corresponding to at least one word, i.e., the characteristic pattern, which is fed from the characteristic pattern extraction circuit 1.

Characteristic patterns of n-kinds of individual speech element are preliminarily registered by the register table 4.

The characteristic patterns read out from the pattern memory 3 and register table 4 are respectively fed to a preliminary selector 5.

The preliminary selector 5 performs a preliminary comparison between the characteristic patterns fed from the pattern memory 3 and register table 4, while the result is memorized by the preliminary selection table 6. The preliminary selection table 6 comprises m (m<n) units of an address area 6a and matching error area 6b. The address area 6a memorizes addresses in the register table 4 for those registered patterns which have been previously selected by the preliminary selector 5.

The matching error area 6b memorizes any error in the result of the matching operation between the characteristic patterns fed from the pattern memory 3 and those characteristic patterns fed from the register table 4 which are selected by the preliminary selector 5.

The preliminary selector 5 orders the addresses and matching errors stored in the preliminary selection table 6 so that the table begins with the one having the least error.

The preliminary selector 5 can use any of a wide variety of known comparison means. For example it may use one in which the characteristic parameters include the length of individual words and the spectrum either at the head or end portion of such words. Refer to the "Report on the studies of the general purpose speech recognizer" (published in March, 1979), chapter 5. In addition, there may be a means which first extracts about 10 points from the characteristic vector time sequence at regular intervals in order to make up about 50 dimensional pattern vectors, and then limits the number of the recognizable objects up to a maximum of 20% using the linear sampling reference. Refer to the "Paper on the results of researches for a large-scale project pattern data processing system", which was published by a Japanese corporation, the Nihon Sangyo Gijutsu Shinko Kyokai, in October, 1979, pages 157 to 165.

As another preferred means, a technique may be used which was proposed in Patent Office of Japan disclosure number TOKUSHUOKAI 56—144449, corresponding to European Patent Application No. 82304782.4, filed 10th September 1982.

This technique is particularly effective and suitable for applying the coefficient of the auto correlation when extracting speech characteristics. Of a variety of the coefficient of the auto correlations typically represented by the high dimensional vector alignment, this technique executes linear matching by means of the low dimensional coefficient of correlation.

As a still further embodiment of the present invention, a simplified version of a complex algorithm to be applied to the final matching operation can be used in the preliminary matching operation.

Using such a simplified calculation algorithm, a rough calculation may be performed.

Input characteristic patterns read out of the pattern memory 3 and registered characteristic patterns read out of the register table 4 are respectively fed to the main selector 7, while the addresses of the register table 4 stored by the preliminary selector table 6 are sequentially fed to the main selector 7.

The main selector 7 reads out characteristic patterns from the register table 4 in compliance with the addresses of the register table 4 fed from the preliminary selector table 6, and then executes the final matching operation with the characteristic patterns stored in the pattern memory 3 in order of the frames. Each frame represents the length of the calculation period for the function that represents the characteristic pattern, for example, an auto-correlative function. For example, such a frame is set in a range from 8 to 30 microseconds. Any matching error detected during the final matching operation is fed to a comparator circuit 8 and also to a minimum error register 9. The main selector 7 controls re-writing operations for the minimum error register 9 so that the least error so far detected from the matching is stored by the minimum error register 9. This least error element stored by the minimum error register 9 is fed to the comparator circuit 8, which then compares the matching error stored by the minimum error register 9 with the matching error fed from the main selector 7 after the matching operation for each individually registered pattern is completed. The comparator circuit 8 then feeds the result of the comparison to the main selector 7, which, in response to the result received, controls the matching operation.

The main selector 7 then reads out the address of the registered characteristic pattern corresponding to the matching error memorized by the minimum error register 9, from the preliminary selector table 6. The main selector 7 then sends this address to the minimum error address register 10.

Figures 2A and B respectively show the flow charts describing the operations performed by the preliminary and main selectors 5 and 7 shown in Figure 1. Figures 3A and B respectively show the flow charts describing the matching operations performed by the preliminary and main selectors 5 and 7 shown in Figure 1.

Figure 4 shows a graph representing the differences between the matching error detected by the main selector 7 of several registered characteristic patterns.

The operation of a preferred embodiment of the present invention shown in Figure 1 is described below.

First, referring to Figure 2—A, the operation of the preliminary selector 5 is described below.

During step 1 (step is abbreviated as S in Figure 2) the preliminary selector table 6 enters an initial state.

During this stage, all the addresses stored in the address area 6a are cleared, whereas any matching error stored in the matching error area 6b is rewritten to the maximum matching error. This maximum matching error represents the largest matching error that is stored in the matching error area 6b.

During step 2 of the operation, a comparison operation for the preliminary selection is executed. Any matching error detected by the step 2 operation is then compared with all of the matching errors stored in the preliminary selector table 6 during the following step 3. During step 4, an operation is executed in order to identify whether or not the matching error detected by the preliminary selector 5 is within the m-th rank of the minimum matching error so far (e.g. the 3rd rank). In other words, it is identified whether or not the matching error detected by the preliminary selector 5 remains within the 3rd rank from the one having the least matching error in the preliminary selector table 6. If it is within the 3rd rank, the detected error and the address of the registered characteristic pattern corresponding to this matching error are then fed to the preliminary selector table 6 during the next step 5.

Then, both the matching errors stored in the preliminary selector table 6 and the corresponding addresses are then re-aligned into error order beginning with the one having the least error in the comparison operation.

As a result, both the matching error having the largest value and the corresponding address stored in the preliminary selector table 6 are eventually eliminated from it. Instead, a matching error fed from the preliminary selector 5 and the corresponding address are written into said table 6.

During step 6, it is identified whether or not the matching operation for the n-th registered characteristic pattern stored in the register table 4 is completed. In other words, it is identified whether the matching of all the characteristic patterns stored in the register table 4 is completed, or not.

If it is identified that the n-th registered characteristic pattern has not yet been matched, the process is repeated beginning with step 2.

As shown in Figure 3—A, the input characteristic pattern memorized by the pattern memory 3 is compared sequentially to the n registered characteristic patterns Rl to Rn of the register table 4.

When the input characteristic pattern has been compared with all the registered characteristic patterns of the register table 4, the preliminary selector table 6 should have stored m values of matching error, in order starting from the least error, and the addresses corresponding to said m values of matching error.

As soon as the preliminary selector 5 has completed its operation, the main selector 7 operates in accordance with the flow chart shown in Figure 2—B.

The main selector 7 sets the minimum error register 9 in its maximum value during the step 21. Such a maximum value is the maximum of matching error stored by the minimum error register 9. The value 'one' is set in a counter i (not illustrated) during step 22. The counter i, for example, is included in the main selector 7 and calculates the number of registered characteristic patterns which have been subjected to the comparison operation carried out by the main selector 7.

During the next step 23, the first address is read out of the preliminary selector table 6. The value 1 is designated by count of the counter i.

During step 24, the registered characteristic pattern corresponding to the address read out during the preceding step 23 is then read out of the register table 4 and compared with the input characteristic pattern.

As shown in Figure 4, the comparison operation is sequentially and cumulatively executed in the order of the frames of the characteristic pattern. As a result, the greater the number of frames have been considered in the comparison operation, the greater the accumulated matching error and then the matching error from the final frame comparison becomes the total of the matching error for the characteristic pattern under consideration.

During step 25, the cumulative matching error for the current frame and the minimum matching error stored in the minimum error register 9 are compared with each other. Then, during the next step 26, it is identified whether the cumulative matching error for the current frame is less than the minimum matching error stored in the minimum error register 9, or not.

If the cumulative matching error for the current frame is less than the minimum matching error stored in the minimum error register 9, the ensuing step 27 then identifies whether matching operations have been carried out for all the frames. If the matching operations for all the frames are not yet completed, the process is repeated from step 24.

If step 27 identifies that the matching operations for all the frames are completed, then during the next step 28, both the minimum error register 9 and the minimum error address register 10 are rewritten with the detected matching error and the corresponding address.

The next step 29 increments counter i and the following step 30 identifies whether i is greater than m, or not. If i is smaller than m, since the preliminary selector 5 has not yet completed the matching operations for all the preliminarily selected registered characteristic patterns, the procedure is repeated from step 23.

Referring to the matching error curves shown in Figure 4, assume that the final matching error X of the matching error curve A (open circles) is stored in the minimum error register 9. In such a case, while the cumulative matching error shown in the matching error curve B (filled circles) is being calculated, the matching error X of the minimum error register 9 will be exceeded at the 14th frame. This is detected in step 26. As a result, during step 31, the matching calculation for the registered characteristic pattern which is the target of the matching operation is then discontinued. In the same manner, the matching calculation is discontinued at the 11th frame in the matching error curve C (open squares), while the matching calculations are discontinued at the 9th frame in the matching error curve D (filled squares). By discontinuing the matching calculation, the calculation requirements during the final selection can be minimized.

After the matching operations are completed for all the preliminary selected registered characteristic patterns, the minimum error address register 10 stores the memorized address for the least matching error throughout all the preliminarily selected registered characteristic patterns. As a result, this address is output as the final recognition result.

Figure 5 shows a block diagram of another preferred embodiment of the present invention. With regard to its configuration, this embodiment is identical to the preferred embodiment shown in Figure 1 except for the following functions. All the corresponding parts are provided with reference numbers identical to Figure. 1, and therefore, descriptions related to these are deleted.

As with the preliminary selector 5 shown in Figure 1, the preliminary selector 50 shown in Figure 5 selects m registered characteristic patterns from the n registered characteristic patterns stored in the register table 4. However, the preliminary selector 50 puts the registered characteristic patterns themselves in order starting from the one having the least matching error and feeds this data to the pattern area 60a of the preliminary selector table 60. In other words, the pattern area 60a in the preliminary selector 60 memorizes the registered characteristic patterns themselves in place of the addresses of the registered characteristic patterns.

The main selector 70 sequentially matches the input characteristic pattern fed from the pattern memory 3 and the registered characteristic patterns stored in the pattern area 60a, and then calculates the matching error.

The result is then fed to the matching error area 60b of the preliminary selector table 60. The main selector 70 provides the comparator circuit 8 with the cumulatively frame by frame matching error and also provides said comparator circuit 8 with the least matching error by reading it out of the memory of the matching error area 60b.

The comparator circuit 8 outputs an instruction to the main selector 70 as soon as the frame by frame cumulative matching error exceeds the least matching error fed from the matching error area 60b.

In response to this output from the comparator circuit 8, the main selector 70 discontinues the matching operation for the current registered characteristic patterns.

Thus, as soon as the preliminary selection from the n units registered characteristic patterns is completed, the main selector 70 reads out the registered characteristic patterns (or their addresses) corresponding to the least matching error stored in the matching error area 60b, and then finally outputs the read-out patterns as the recognition result.

In the preferred embodiments described above, matching operations are executed in accordance with. the matching error detected. The present invention also includes alternative embodiments which use a degree of similarity, and matching operations may also be executed based on such a degree similarity.

In this case, a type of similarity is measured on the basis of the similarity that is cumulatively available in order of the frames, and if such a similarity is found to be less than the one that represents the maximum of the similarity, then the calculations for the similarity of the current characteristic pattern may be instantly discontinued.

If desired, a matching operation such as that described in our co-pending European Patent Application No. 82306927.3 (Agent's Ref: J.16097 Europe), claiming priority from Japanese Patent Applications Nos. 56—210605 and 56—214175, which is being filed simultaneously with the present application, can be used after the preliminary matching operation.

**Claims**

1. A method of speech recognition in which,

in a preliminary comparison operation a preliminary comparison is made between an input speech pattern and each of a plurality of registered speech patterns, and

in a further comparison operation a further comparison is performed between the said input speech pattern and each of selected ones of the said plurality of registered speech patterns, the selected registered speech patterns being selected on the basis of the preliminary comparison operation,

characterised in that

the said further comparison operation comprises, for all the said selected registered speech patterns following the first to be subjected to the further comparison operation, initiating the calculation of a parameter correlative to the degree of resemblance between the input speech pattern and the respective registered speech pattern and abandoning the said calculation in respect of that registered speech pattern if a threshold for said parameter is passed during the said calculation, which threshold has a single value (X) throughout the calculation and is initially set with reference to the degree of resemblance between the said first selected registered speech pattern and the said input speech pattern,

and the order in which the said comparisons in the further comparison operation are conducted on the said selected registered speech patterns follows the order of the similarity between each respective said registered speech pattern and the said input speech pattern as determined by the said preliminary comparison operation, beginning with the most similar.

2. A method according to claim 1 in which the said parameter for a respective registered speech pattern is calculated cumulatively in a plurality of stages.

3. A method according to claim 1 or claim 2 in which the parameter represents similarity between the input speech pattern and the registered speech pattern and the calculation is abandoned when the current calculated value of the parameter falls below the threshold.

4. A method according to claim 1 or claim 2 in which the parameter represents difference between the input speech pattern and the registered speech pattern and the current calculated value of the parameter lies above the threshold.

5. A method according to any preceding claim in which the threshold is the final value of the said parameter for the registered speech pattern out of the registered speech patterns on which the said further comparison operation has so far been conducted which most closely resembles the input speech pattern.

**Patentansprüche**

1. Verfahren zur Spracherkennung, bei dem in einer Vorvergleichsoperation ein Vorvergleich zwischen einem Eingangssprachmuster und jedem von einer Vielzahl von gespeicherten Sprachmustern durchgeführt wird und bei dem in einer weiteren Vergleichsoperation ein weiterer Vergleich zwischen dem Eingangssprachmuster und jedem von aus der Vielzahl von gespeicherten Sprachmustern ausgewählten Mustern durchgeführt wird, wobei diese Muster aufgrund der Vorvergleichsoperation aus den gespeicherten Sprachmustern ausgewählt werden, dadurch gekennzeichnet, daß die weitere Vergleichsoperation für alle ausgewählten gespeicherten Sprachmuster, die dem ersten der der weiteren Vergleichsoperation zu unterwerfenden Muster folgen, den Beginn der Berechnung eines von dem Grad der Übereinstimmung zwischen dem Eingangssprachmuster und dem entsprechenden gespeicherten Sprachmuster abhängigen Parameters umfaßt, sowie der Beendigung der Berechnung in bezug auf das gespeicherte Sprachmuster, wenn ein Grenzwert für den Parameter während der Berechnung überschritten wird, wobei der Grenzwert einen bestimmten Wert (X) während der Berechnung hat und am Anfang mit Bezug auf den Grad der Übereinstimmung zwischen dem ersten ausgewählten gespeicherten Sprachmuster und dem Eingangssprachmuster auf diesen Wert gesetzt wird, und daß die Reihenfolge, in der die Vergleiche in der weiteren Vergleichsoperation mit den ausgewählten gespeicherten Sprachmustern der Reihenfolge der Ähnlichkeit zwischen jedem entsprechenden gespeicherten Sprachmuster und dem Eingangssprachmuster, wie durch die Vorvergleichsoperation festgelegt, folgt, wobei mit dem Vergleich der größten Ähnlichkeit begonnen wird.

2. Verfahren nach Anspruch 1, dadurch gekennzeichnet, daß der Parameter für ein entsprechendes gespeichertes Sprachmuster kumulativ in einer Vielzahl von Stufen berechnet wird.

3. Verfahren nach Anspruch 1 oder 2, dadurch gekennzeichnet, daß der Parameter die Ähnlichkeit zwischen dem Eingangssprachmuster und dem gespeicherten Sprachmuster darstellt und die Berechnung beendet wird, wenn der laufende Wert des Parameters unter einen Grenzwert abfällt.

4. Verfahren nach Anspruch 1 oder 2, dadurch gekennzeichnet, daß der Parameter die Differenz zwischen dem Eingangssprachmuster und dem gespeicherten Sprachmuster darstellt und der laufend berechnete Wert des Parameters oberhalb des Grenzwerts liegt.

5. Verfahren nach einem der vorhergehenden Ansprüche, dadurch gekennzeichnet, daß der Grenzwert den endgültigen Wert des Parameters für dasjenige gespeicherte Sprachmuster aus allen gespeicherten Sprachmustern, mit denen die weitere Vergleichsoperation ausgeführt worden ist, bildet, das dem Eingangssprachmuster am meisten ähnelt.

**Revendications**

1. Procédé de reconnaissance de la parole, selon lequel,

— lors d'une opération de comparaison préliminaire, une comparaison préliminaire est effectuée entre une forme vocale d'entrée et chaque forme d'un ensemble de formes vocales enregistrées, et

— lors d'une seconde opération de comparaison, une seconde comparaison est exécutée entre ladite forme vocale d'entrée et chacune des formes sélectionnées à l'intérieur dudit ensemble de formes vocales enregistrées, les formes vocales enregistrées sélectionnées, étant sélectionnées sur la base de l'opération de comparaison préliminaire,

caractérisé en ce que

— ladite seconde opération de comparaison inclut, pour toutes lesdites formes vocales enregistrées sélectionnées intervenant à la suite de la première forme vocale devant être soumise à la seconde opération de comparaison, le déclenchement du calcul d'un paramètre qui est en corrélation avec le degré de similitude entre la forme vocale d'entrée et la forme vocale enregistrée respective, et l'arrêt dudit calcul en rapport avec cette forme vocale enregistrée si un seuil pour ledit paramètre est franchi pendant ledit calcul, ce seuil possédant une valeur unique (X) pour l'ensemble du calcul et étant réglé initialement en référence au degré de similitude entre ladite première forme vocale enregistrée sélectionnée et ladite forme vocale d'entrée, et

— l'ordre, dans lequel lesdites comparaisons intervenant lors de la seconde opération de comparaison sont conduites sur lesdites formes vocales enregistrées sélectionnées, correspond à l'ordre du caractère de similitude entre chacune desdites formes vocales enregistrées et ladite forme vocale d'entrée, déterminée par ladite opération de comparaison préliminaire, en commençant par les plus similaires.

2. Procédé selon la revendication 1, selon lequel ledit paramètre pour une forme vocale enregistrée respective est calculé d'une manière cumulée en plusieurs étapes.

3. Procédé selon la revendication 1 ou 2, selon lequel le paramètre représente le caractère de similitude entre la forme vocale d'entrée et la forme vocale enregistrée, et le calcul est arrêté lorsque la valeur instantanée calculée du paramètre tombe au-dessous du seuil.

4. Procédé selon la revendication 1 ou 2, selon lequel le paramètre représente la différence entre la forme vocale d'entrée et la forme vocale enregistrée, et la valeur instantanée calculée du paramètre se situe au-dessus du seuil.

5. Procédé selon l'une quelconque des revendications précédentes, selon lequel le seuil est la valeur finale dudit paramètre pour la forme vocale enregistrée extraite des formes vocales enregistrées, sur laquelle ladite seconde opération de comparaison a été jusqu'alors menée et qui ressemble le plus à la forme vocale d'entrée.

FIG.1

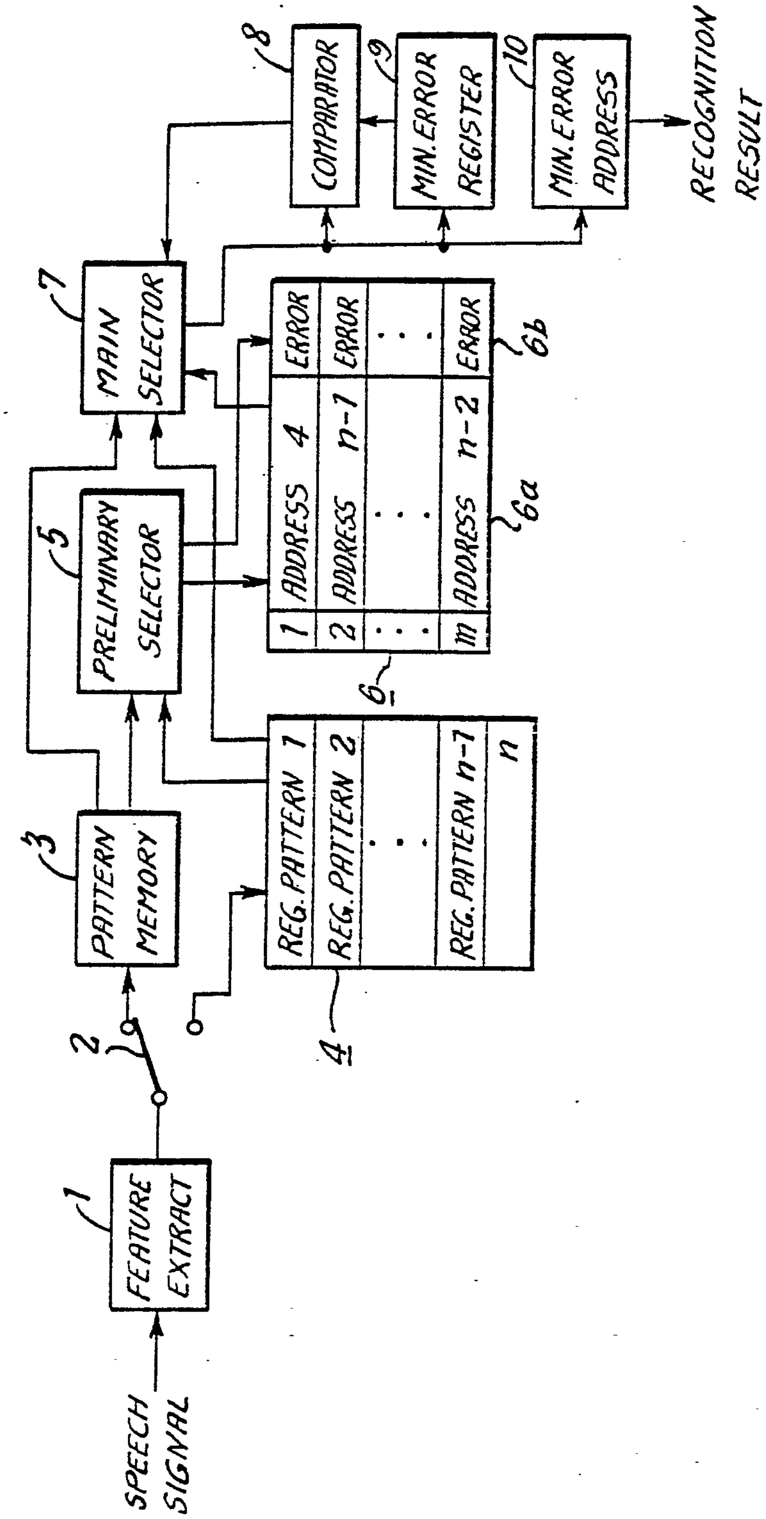
SPEECH SIGNAL
FEATURE EXTRACT
PATTERN MEMORY
REG. PATTERN 1
REG. PATTERN 2
REG. PATTERN n-1
n
PRELIMINARY SELECTOR
1 ADDRESS 4 ERROR
2 ADDRESS n-1 ERROR
m ADDRESS n-2 ERROR
MAIN SELECTOR
COMPARATOR
MIN. ERROR REGISTER
MIN. ERROR ADDRESS
RECOGNITION RESULT
1
2
3
4
5
6
6a
6b
7
8
9
10

FIG.2A

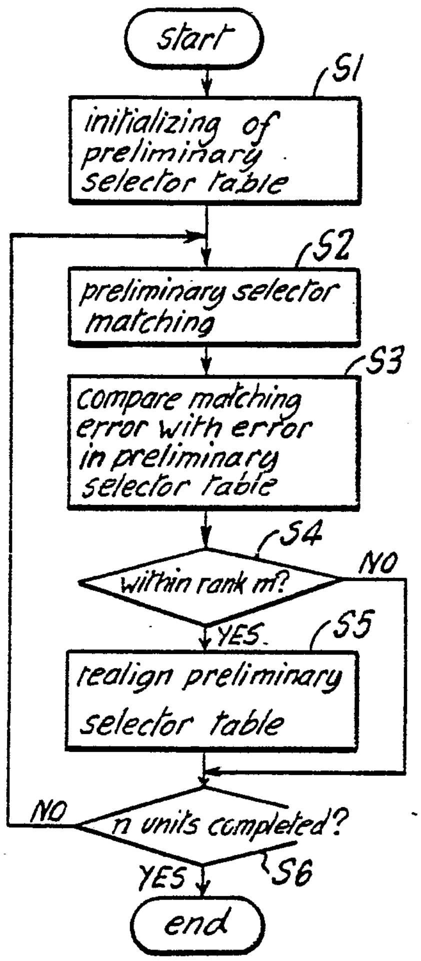
start
S1
initializing of preliminary selector table
S2
preliminary selector matching
S3
compare matching error with error in preliminary selector table
S4
within rank m?
NO
YES
S5
realign preliminary selector table
NO
n units completed?
S6
YES
end

FIG.2B

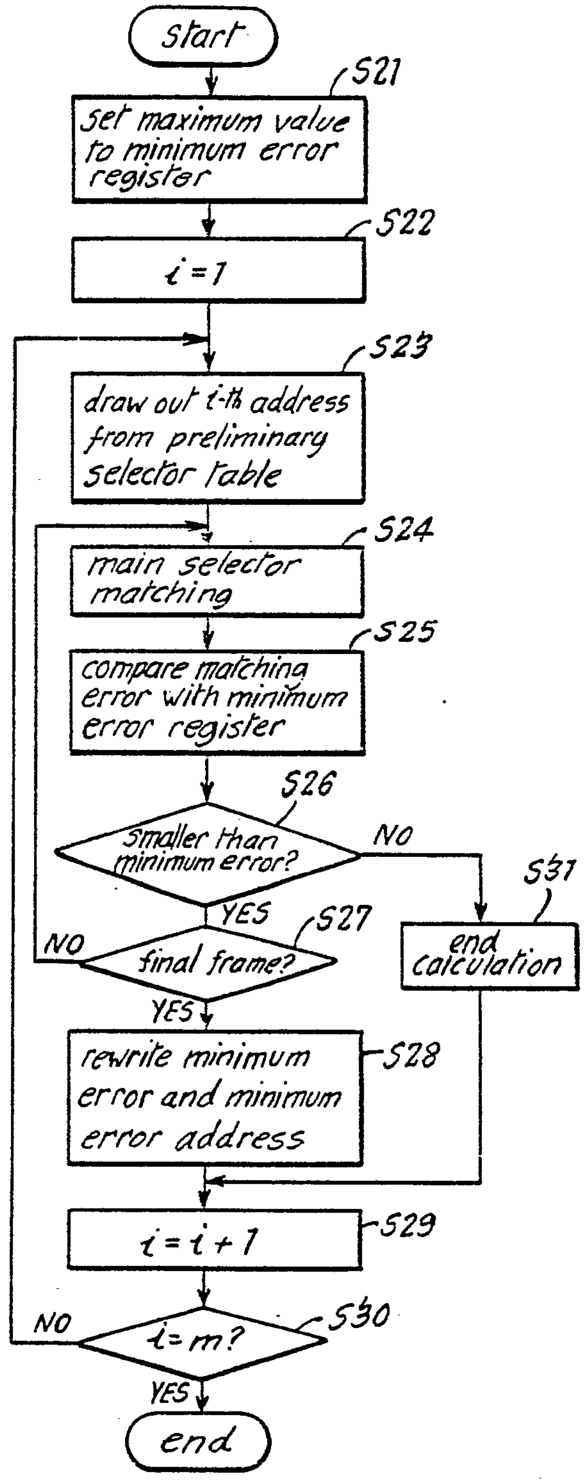
start
S21
set maximum value to minimum error register
S22
i = 1
S23
draw out i-th address from preliminary selector table
S24
main selector matching
S25
compare matching error with minimum error register
S26
smaller than minimum error?
NO
S31
end calculation
YES
S27
NO
final frame?
YES
rewrite minimum error and minimum error address
S28
i = i + 1
S29
NO
i = m?
S30
YES
end

FIG.3A

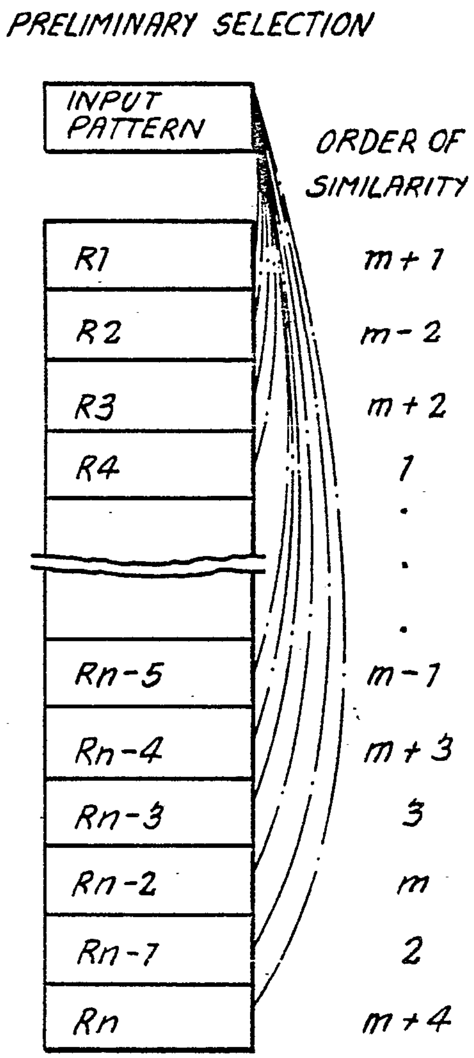
PRELIMINARY SELECTION
INPUT PATTERN
ORDER OF SIMILARITY
R1
m+1
R2
m-2
R3
m+2
R4
1
Rn-5
m-1
Rn-4
m+3
Rn-3
3
Rn-2
m
Rn-1
2
Rn
m+4

FIG.3B

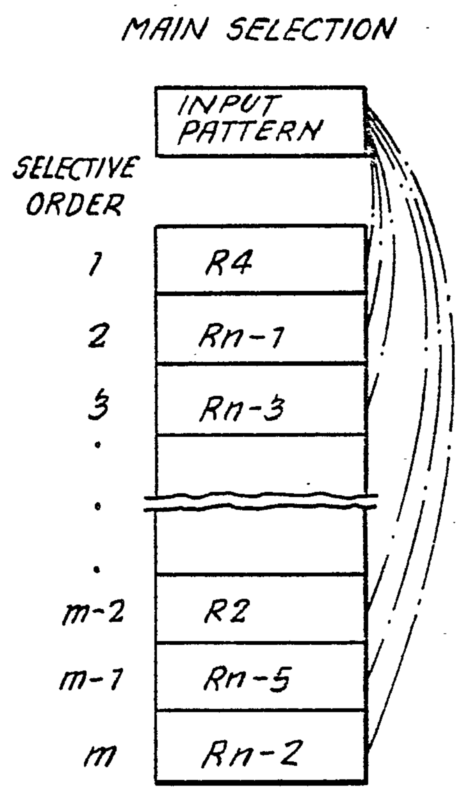
MAIN SELECTION
INPUT PATTERN
SELECTIVE ORDER
1
R4
2
Rn-1
3
Rn-3
m-2
R2
m-1
Rn-5
m
Rn-2

FIG. 4

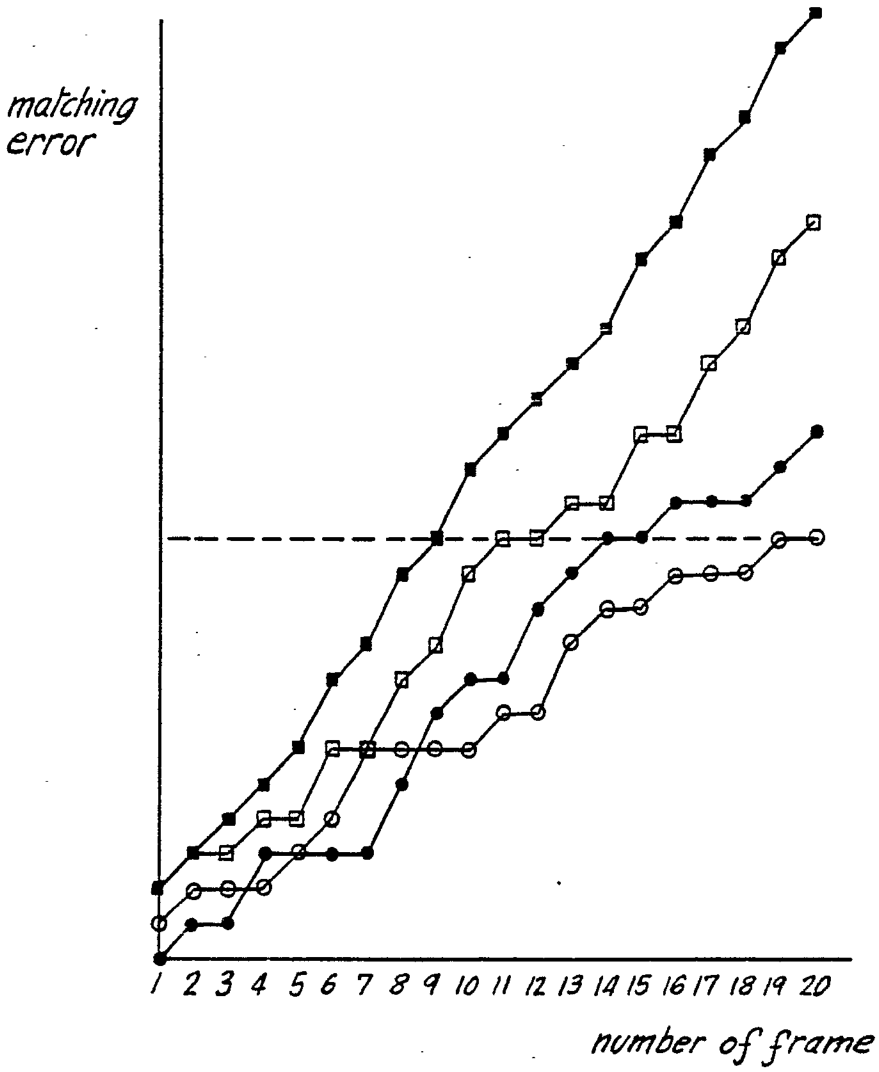
matching error
1 2 3 4 5 6 7 8 9 10 11 12 13 14 15 16 17 18 19 20
number of frame

FIG.5

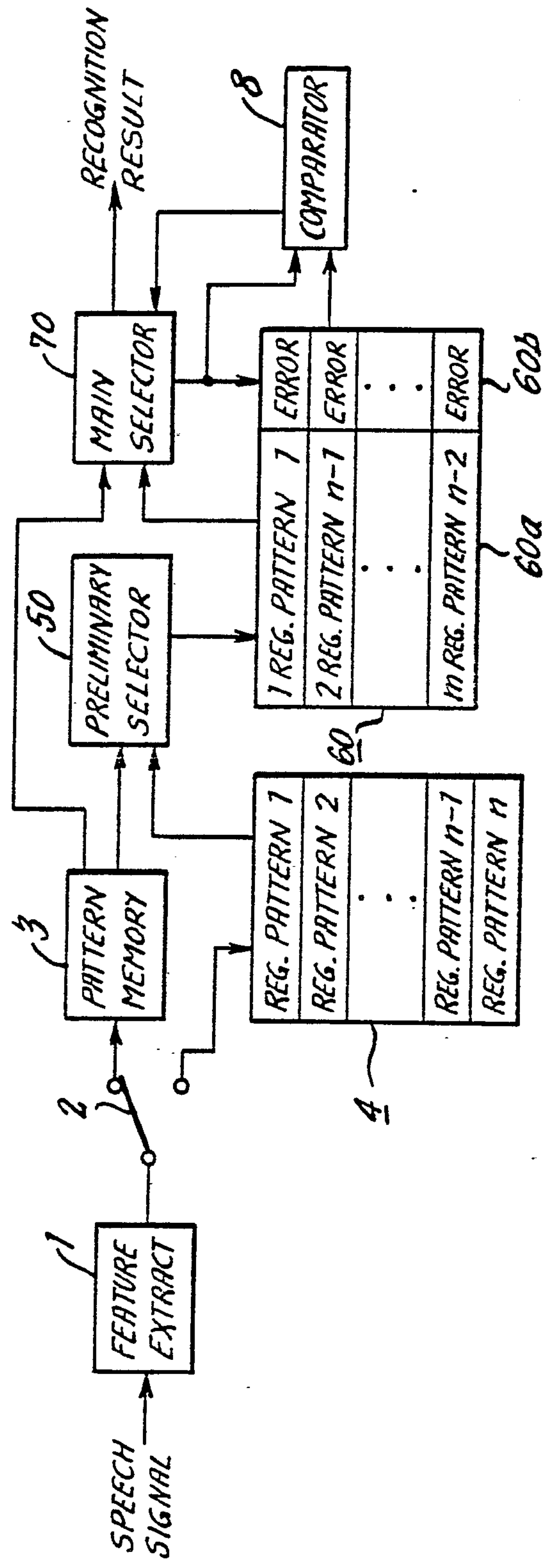
SPEECH SIGNAL
FEATURE EXTRACT
1
2
PATTERN MEMORY
3
REG. PATTERN 1
REG. PATTERN 2
REG. PATTERN n-1
REG. PATTERN n
4
PRELIMINARY SELECTOR
50
1 REG. PATTERN 1
2 REG. PATTERN n-1
m REG. PATTERN n-2
ERROR
ERROR
ERROR
60
60a
60b
MAIN SELECTOR
70
COMPARATOR
8
RECOGNITION RESULT